# EUROPEAN PATENT SPECIFICATION

(11) **EP 4 452 786 B1**
(45) Date of publication and mention of the grant of the patent: **30.07.2025**
(21) Application number: 24704238.5
(22) Date of filing: 18.01.2024
(51) Int. Cl.: B65G 1/04, B65G 1/137, B65G 60/00, B65G 65/00, B65D 77/04, B65D 1/36

(54) **STORAGE AND SORTING SYSTEM AND MEANS FOR ITS ORGANIZATION AND OPERATION**
LAGER- UND SORTIERSYSTEM
SYSTÈME DE STOCKAGE ET DE TRIAGE

(30) Priority: 09.05.2023 EP 23172366
(43) Date of publication of application: 30.10.2024
(73) Proprietor: MARTISTEL INNOVATION FZCO, Dubai 342001 (AE)
(72) Inventor: SULTANOV, Oleg, Palm Jumeirah (AE); ZARETCKII, Andrei, Dubai, 3403 (AE); RAZUMOV, Sergey, Strovolos 2047 (CY)
(74) Representative: Jeck, Jonathan
(86) International application number: PCT/IB2024/050476
(87) International publication number: WO 2024/150199

(56) References cited:
- EP-A1- 3 957 580
- WO-A1-2022/207911
- WO-A1-2022/253778
- JP-A- 2002 338 006
- JP-A- 2013 133 220
- KR-U- 20170 003 633
- US-A1- 2022 380 129

## Description

The present invention relates to a storage and sorting system according to claim 1 and the use of a sorting apparatus in a storage and sorting system according to claim 6.

### Prior art

We are aware of the publication PCT/EP2022/058762, in which the main object of the invention is a system for storing and handling items in stacks of trays, where trays with items are stored in stacks on storage locations placed in two mutually perpendicular horizontal directions. For picking up, placing and moving the stacks of trays, there are transport mobile devices that move along the transport network of the system and independently pick up and place the stacks of trays from the storage locations. Moreover, PCT/EP2022/058762 includes a device for re-sorting the stacks of trays so that the target tray can be turned into a top tray with a minimum number of manipulations. The tray stacks are transported to the tray re-sorting device by means of transport mobile devices. A variant version of the storage and handling system according to PCT/EP2022/058762 is shown in Fig. 2 of this document.

WO2022253928A2 discloses a storage and retrieval system in which items are stored in containers. The containers are arranged in stack units. Each stack unit comprises a stand comprising a stand top and one or more legs extending downwardly from the stand top. The containers are arranged in a stack on top of the stand top. Each stack unit is movable by a vehicle dimensioned to allow the vehicle to move underneath the stand top. Each vehicle comprises a lifting mechanism moveable between a raised position and a lowered position to raise the stack unit off the ground and lower the stack unit onto the ground respectively.

US2022380129A1 teaches an automated storage retrieval system and method for receiving and delivering goods using a pickup device are provided. According to an embodiment, the automated storage retrieval system includes: a plurality of vertically loaded goods vertically stacked without a separate loading rack; a goods pickup device that includes a goods lift configured to lift at least one in a column of the vertically loaded goods in a vertical direction and a goods picker configured to approach a space generated by being lifted by the goods lift to take out goods placed in the space or load the goods into the space; and a goods buffer unit configured to carry the goods to take out or load the goods. In addition, an item picking method that directly takes out an item in goods instead of taking out the goods is also disclosed.

JP 2002 338006 A discloses a storage and sorting system comprising at least one stack of trays the stack of trays comprises at least two trays stacked on top of each other, a mobile transport unit is provided on which the stack of trays is transportable, a sorting apparatus is provided, respectively, wherein the sorting apparatus comprises:
a. A mechanism that is adapted to lift up the tray(s) from the source tray in which the objects is/are located,
b. A mechanism that is adapted to lift up any/all pallets inside the source tray, from the pallet on which the object is located.

The disadvantages of the storage and handling system of the prior art are
1. Storing a limited range of items in a single tray (when separated by a device - usually no more than eight) - increases the space taken up by the storage system and, as a consequence, its cost.
2. The need to move along the transport routes to other equipment where items in the trays are processed after re-sorting the trays - increases the transport routes and as a consequence the number of MTUs required in the system.
3. The picking of items between trays in a publication is either done manually or by an automatic device with a very expensive visual recognition system, which in both cases makes the handling of items in trays more expensive.

### The essence of the invention

According to the present invention an automatic device for picking items directly from a stack of trays, as well as the method of operation of the device and an improved method of storing items in trays is claimed.

Thus, by improving the way items are stored inside the stack trays by adding multiple levels of pallets divided into cells to each tray, we gain the following advantages over the prior art publication system:
1. Significantly expand the range of items in a single stack of trays, reducing the storage system's footprint and thereby making it cheaper.
2. We simplify the automatic apparatus for picking items between trays by eliminating the need for an expensive visual identification system and, as a consequence, the software that makes it work.

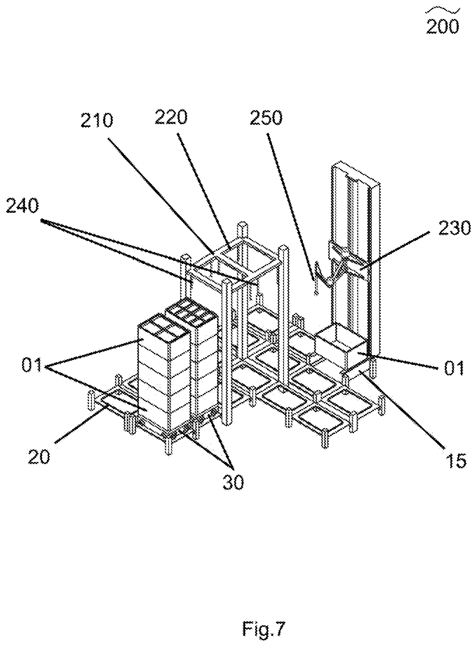

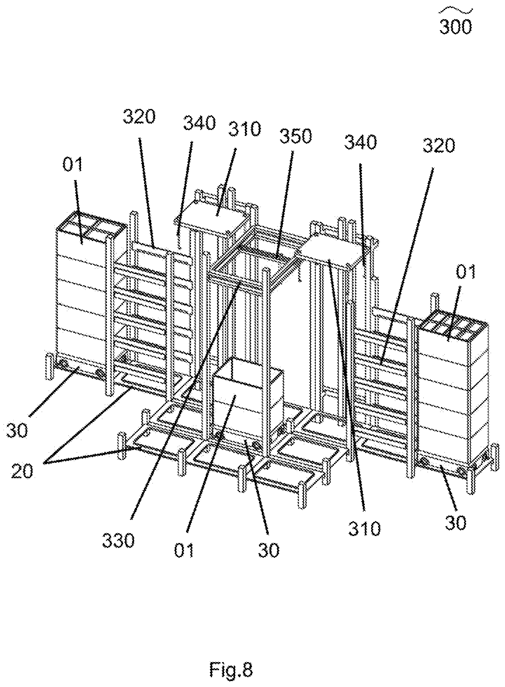

At the same time, the automatic item picking device itself, consisting of a tray gripper, a pallet gripper and an item gripper in various combinations, provides the following advantages over a re-sorter from a publication:
3. The processing of items between the target trays of a brought stack of trays takes place directly in the unit, increasing the processing speed.
4. The processing of items between the target trays of a brought stack of trays takes place directly in the unit, which reduces the amount of MTU required in the system, and consequently makes it cheaper.
5. The automatic device variants shown in Fig. 7 and 8 of the application show that the device can simultaneously prepare several stacks of trays for picking, increasing the productivity of the system many times over.

List of drawings.
1. Fig.1 shows the automatic item picking device directly from a brought stack of trays. The view is isometric.
2. Figure 2 shows a section of a stackable tray storage and handling system similar to the prior art, configured for the operation of automatic transport mobile units on it. The view is isometric.
3. Fig. 3 shows a transport mobile unit (30) with a stack of trays designed to operate in a prior art stack of trays storage and handling system. The view is isometric.
4. Figures 4a and 4b show a new way of storing items in a tray on pallets divided into different numbers of cells, the dimensions of which are determined by the size of the items stored in them, placed inside each tray in several levels. The view is isometric.
5. Fig. 5a - 5n shows the step-by-step operation of the automatic item picker directly from a brought stack of trays. The view is isometric.
6. Fig. 6 shows the automatic appliance for picking items directly from a brought stack of trays in the tray-acceptor replacement position. The view is isometric.
7. Figure 7 shows another implementation of an automatic item picking device directly from a brought stack of trays. The view is isometric.
8. Fig. 8 shows a third implementation of the automatic item picker directly from a brought stack of trays. The view is isometric
9. Figure 9 shows another version of the automatic picking device, the fourth, which uses a combination of devices from the second and third variants, allowing for streaming picking. The view is isometric.
10.Figure 10 shows the fifth version of the picking device with a portal picker, equipped with additional elevators target trays, designed for stream picking. Isometric view.

### Description.

The main object of the present invention is an automatic apparatus for picking items directly from a stack of trays, as well as a method of operating the apparatus and a method of storing the items in the trays. The automatic item picking device in the present invention comprises the following modules: a first module providing access to any tray of the stack of trays; a second module providing access to any palette in any of the trays of the stack; a third module providing movement of an item from a donor tray to an acceptor tray - picking device. The above-mentioned modules of the device may be implemented either separately or in a single body. In addition, to implement the present invention, a new method of storing objects in stacks of pallets divided into a different number of cells, the size of which may be determined by the size of the objects stored in them, placed inside each tray in several levels, is proposed.

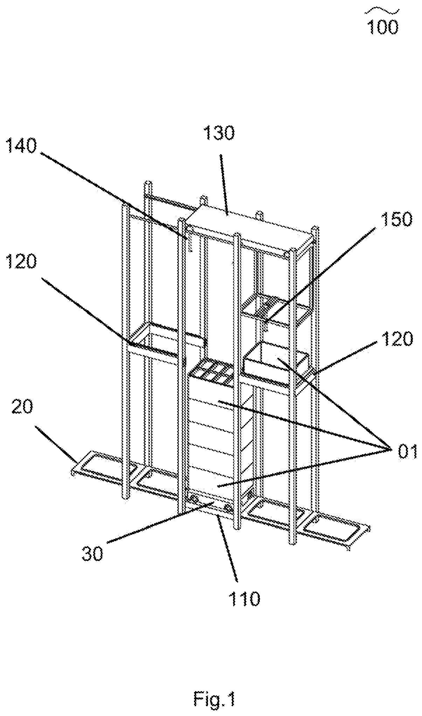

Figure 1 shows an automatic item picking device (100) directly from a brought stack of trays configured to operate in a stackable tray storage system (10), linked to it by transport tracks (20), in which automatic transport mobile devices (30) are used to feed stacks of trays (01).

As shown in figure 1, the automatic device for picking items directly from a delivered stack of trays (100) comprises:
- Load platform (110) which has the possibility to move vertically and in its lower position may be coupled to transport tracks (20),
- the upper surface of the platform - the working surface -, can be configured similarly to the transport tracks (20) and is designed to receive an automatic transport mobile device (MTU - 30), both, empty or with a stack of trays (01). The load platform (110) is designed to move the automatic transport mobile unit (30) with or without the brought stack of trays (01) vertically to the required height and may be the only mechanism in this device that enables vertical movement (this is not a prerequisite);
- (two) grippers (120) for trays positioned above the transport tracks (20)/adjacent to the load platform at a height at or above the highest tray on the mobile transport device and/or as to allow the automatic transport mobile units (30) with stacks of trays (01) to pass underneath them and/or the grippers (120) are designed for picking and/or positioning any number of trays (01) from/on the (brought) stack and withdrawing and holding them in areas adjacent to the load platform (110);

The load platform may be part of a vertical arrangement for lifting up the mobile transport device with the stacks of trays or just the stacks of tray upwardly to a position in which the grippers (120) may grab the stack, a sub-stack or a single tray from that stack. The load platform may be adapted as an elevator for the mobile transport device with a stack of trays or for the stack itself.

The grippers may be arranged adjacent to the load platform in a horizontally static manner or adaptable in height. The grippers are preferably arranged on different, preferably opposite side of the load platform.
- a (movable) platform (130) located above the grippers (120) / above the load platform (110), preferably above the transport tracks (20) may be provided. The platform (130) is adapted to pick up single or multiple pallets (02, 03, 04) units from within a tray (01) and may be designed to accommodate the rest of the appliance's mechanisms and/or may ensure their horizontal movement along the transport tracks (20);
- further grippers (140) preferably attached to or located at the movable platform (130), e.g. underneath it on the left side, adapted for picking up, holding and stacking any number of pallets (02, 03, 04) stored in stacks in any of the trays (01);
- an (movable)object gripper (150) preferably mounted on or in proximity to the movable platform (130), e.g. underneath it to the right, adapted for picking up and/or holding and/or stacking objects (A, B, C) from/into any pallet (02, 03, 04) placed under the gripper.

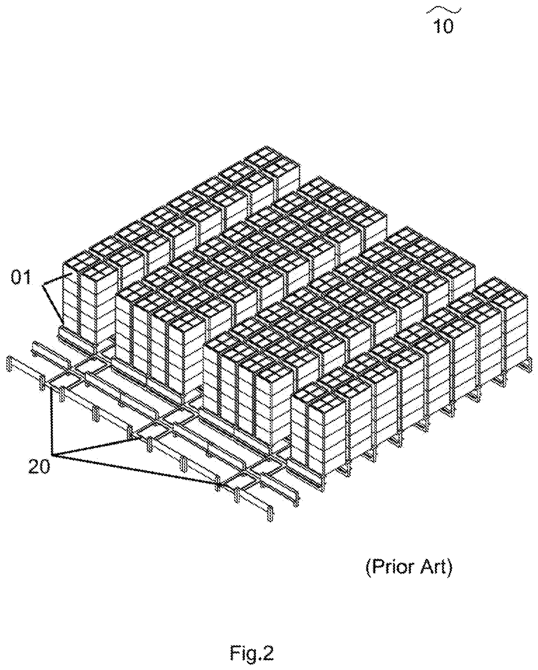

Figure 2 shows a section of a storage and handling system (10) for stackable trays known from PCT/EP2022/058762, equipped with transport tracks (20) configured for operation of automatic transport mobile devices (30) thereon.

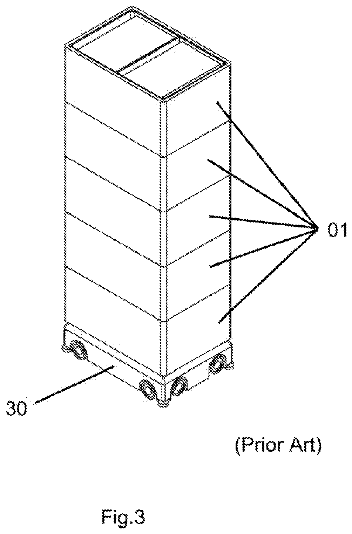

Figure 3 shows a mobile transport device (30) with a stack of trays (01) standing on the MTU, in accordance with the current state of the art known from publication PCT/EP2022/058762.

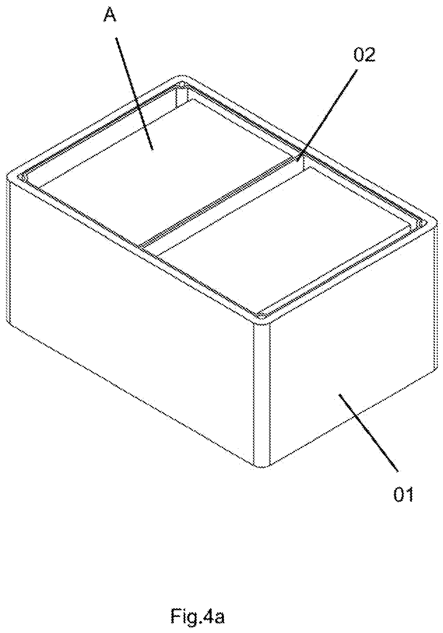

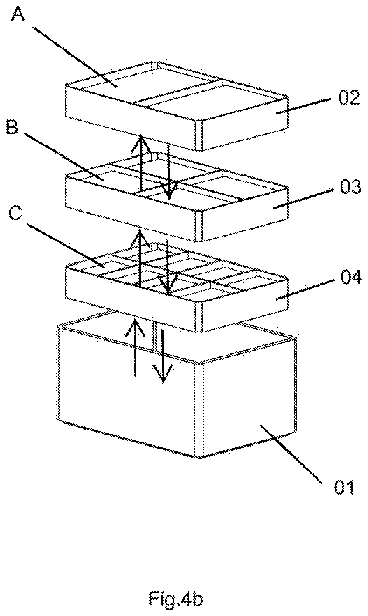

Fig. 4a and 4b show an improved way of storing different objects (A, B, C) in the same tray (01). Fig. 4a shows a tray (01) filled with different objects (A, B, C) lying on different pallets (02, 03, 04). Fig. 4b, for clarity, shows the same tray (01) with its contents extracted and the way it is filled.

As can be seen from the figure inside the tray (01) a stack of pallets (02, 03, 04) are stored, divided into different numbers of cells: thus, the pallets (02) are e.g. divided into two cells, the pallets (03) e.g. into four, the tray (04) e.g. into eight, and exemplary items (A), (B) and (C) are stored in them according to the size of the cells. The figure shows a stack of three pallets in one tray and the number of cells in the trays two, four and eight, which is only an illustrative example to convey the essence of the invention, but is not intended to limit it. It is clear to the skilled person that both the number of trays in a stack and the number of cells in a pallet may be arbitrary. It is also clear to the skilled person that although the figure shows that the pallets hold different objects one in each cell of the pallets, each cell may hold more than one identical object, and all the pallets in the stack in the tray may be identical, etc.

Also, as can be seen from Fig. 4b, when stacking the pallets (02, 03, 04) inside the tray (01), the inner walls of the tray may guide the pallets and the corners of the pallets can be provided with indentations, through which the further grippers (140) of the automatic item picker pass from top to bottom directly from the brought tray stack during pallet picking/stacking. In this way, the further grippers (140) can pick up any number of the top pallets of the stack contained in the tray (01) in a single operation.

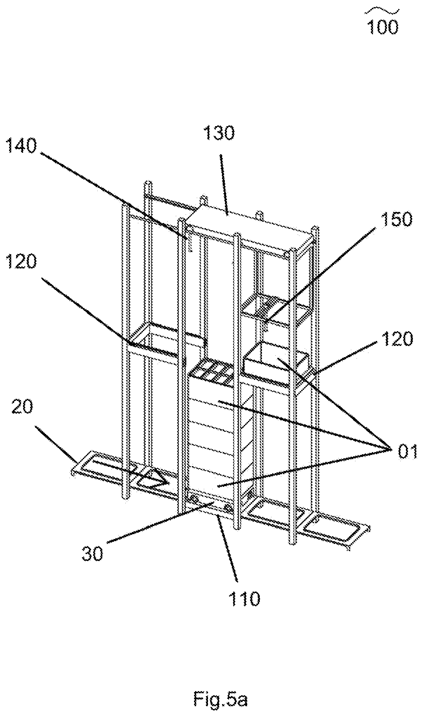

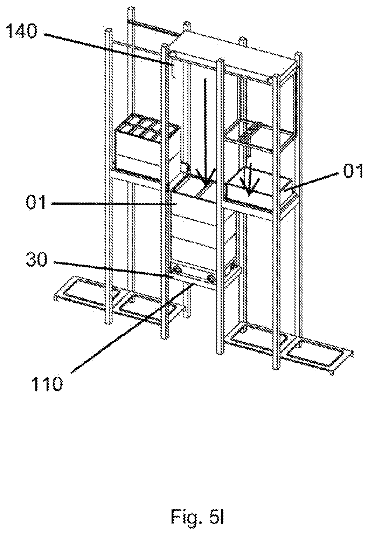

Fig. 5a - 5n shows the detailed sequence of steps in the operation of the automatic item picker (100) directly from a brought stack of trays.

For example, Fig. 5a shows the initial state of the automatic item picking device (100) directly from a brought stack of trays, in which an automatic transport mobile device (30) with a stack of trays (01) containing a target item for picking is driven onto the load platform (110) from the transport tracks (20). At the same time, in a first gripper (120) of the device (100) there is an acceptor tray (01) into which the target item is to be moved.

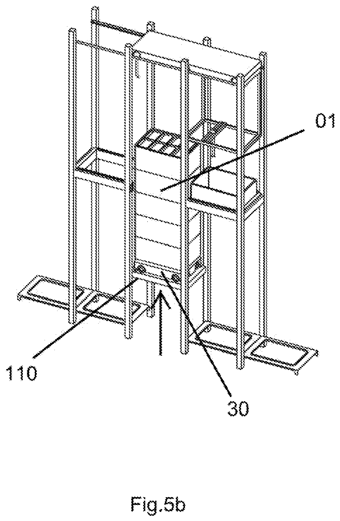

Figure 5b shows the next step in the appliance's operating sequence, in which the load platform (110) is moved upwards so that a second gripper (120) of the appliance can remove the stack tray above the target item tray.

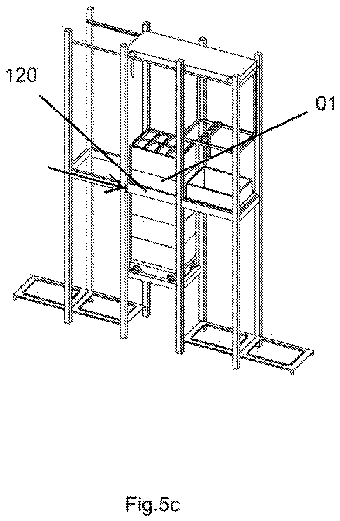

In fig. 5c, the second gripper (120) of the device (100) grabs the tray above the target tray.

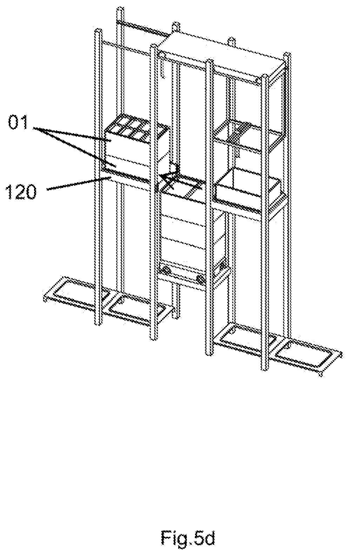

In fig. 5d the second gripper (120) of the device (100) moves the held sub-stack of trays into the gripper's original position away from the working area of the load platform (110).

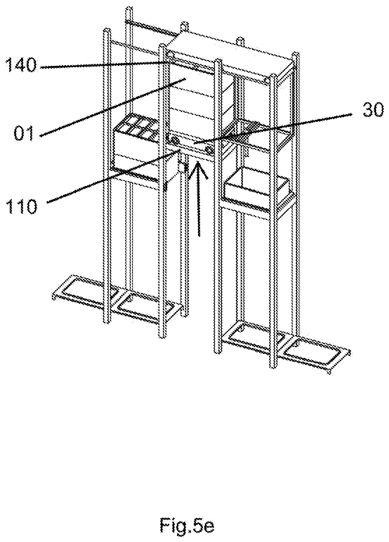

In the position shown in figure 5e, the load platform (110) has moved vertically upwards so that the further grippers (140) of the device (100) can remove the stack of pallets (03) located in the tray above the target item.

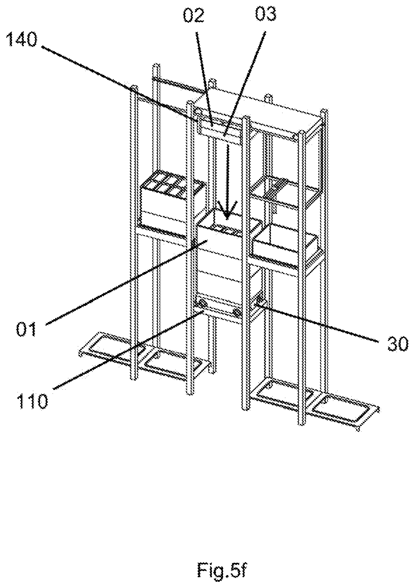

In fig. 5f. The load platform (110) has moved vertically downwards, aligning the stack tray standing on the MTU (30) with the target object with the object-acceptor held by the first gripper (120) of the device (100).

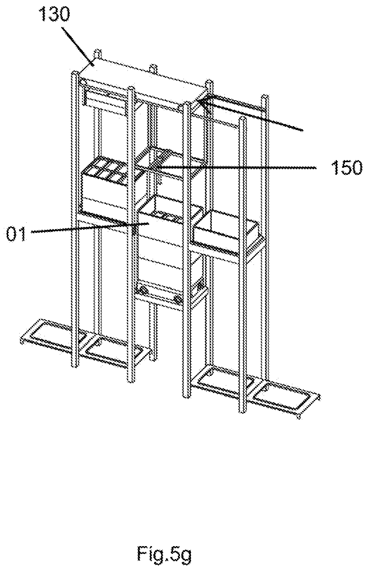

In fig. 5g, preferably the movable platform (130) is moved horizontally to the left so that the object gripper (150), which can be attached to it from below, can move into the working area of the load platform (110). The object gripper (150) itself has moved within its working area to the coordinate corresponding to the position of the target object lying on the pallet (03) in the now upper tray (01) of the stack.

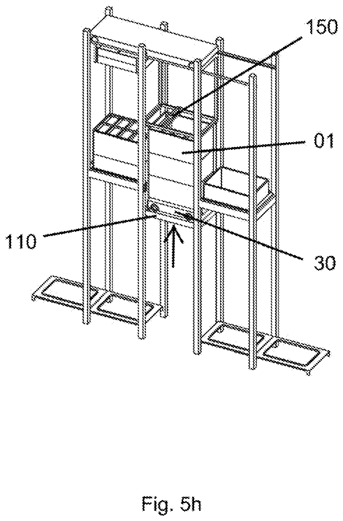

In fig. 5h, the load platform (110) moves upwards so that it presses the target object lying in the top tray of the stack on the pallet against the object gripper (150).

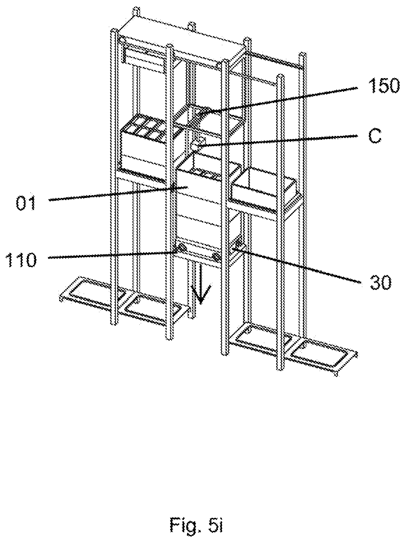

Fig. 5i shows the following position of the operating device (100), in which the load platform (110) has moved lower, aligning the top tray of the stack of trays standing on the MTU (30) with the object-acceptor tray (01) held by the first gripper (120) of the device (100) or at least to move out of the way of the object gripper (150) so it can transfer the object C out of the source tray. The target item (C) is picked up by the object gripper (150).

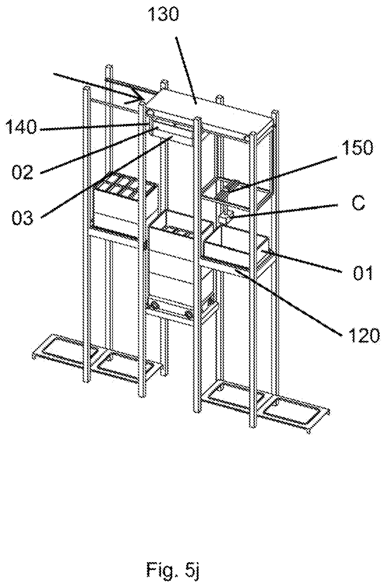

In fig. 5j the movable platform (130) or at least the object gripper (150) moves horizontally to the right so that the object gripper (150) with the object it holds (C) moves into position over the tray-acceptor (10) held by the first gripper (120) of the device (100). The movable platform (130) is moved back to a position above the load platform.

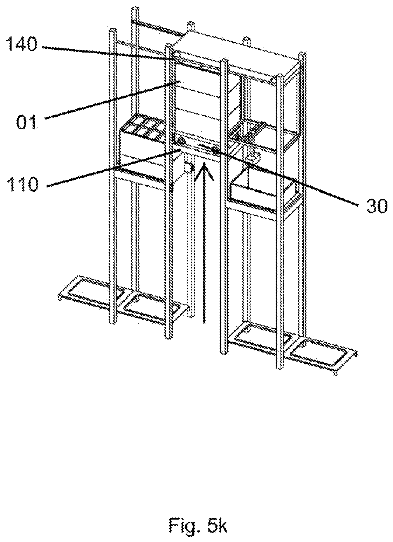

The following figure 5k shows the position in which the load platform (110) is moved upwards to bring the stack of pallets held by the further grippers (140) of the device (100) back into the upper tray (01) of the stack on the MTU (30). Preferably at the same time, the item gripper (150) holding the target item (C), previously taken from the stack tray, may move downwards in its working area to place the object within the object-acceptor (10) held by the first gripper (120) of the device (100).

In fig. 5I, the object gripper (150) no longer holds the target object (C) and it falls by gravity into the target tray (01) held by the first gripper (120) of the device (100).

This is an accelerated method of stacking items during picking and may only be possible for a limited range of items. If an item is fragile or requires careful stacking for some other reason, the upper acceptor tray is moved onto the stack of trays standing on the MTU (30) into the working area of the load platform (110), then the acceptor tray is brought directly to the item gripper (150), which releases the retained item and it is stacked gently.

Preferably simultaneously and/or independently with/from the loading of the object (C) into the acceptor tray, in fig. 5I the load platform (110) is moved downwards to such a height as to prepare the stack of trays for the return of the two upper trays of the stack previously withdrawn by the left grip (120) of the device (100).

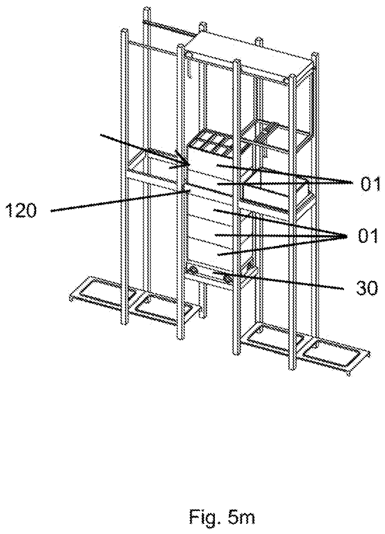

Further, in fig. 5m, the second gripper (120) of the device (100) moves the retained trays into the working area of the load platform (110), and returns them to their original position on the tray stack.

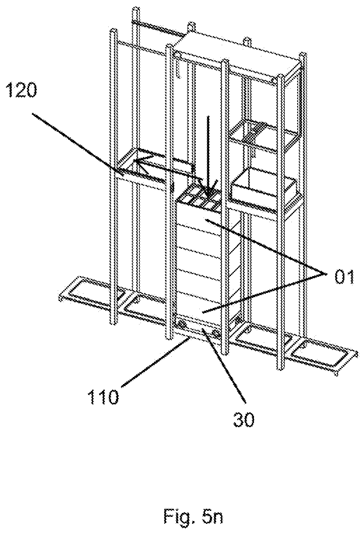

Fig. 5n shows the final position of the operation, in which the second gripper (120) returns empty to its original position, the load platform (110) moves to its lower position, the MTU (30) with the stack of trays on the load platform (110) aligns in height with the transport tracks (20) of the system, and can leave the device (100), which has completed the operation to move the target object (C) directly from the target tray of the previously brought stack into the acceptor tray. Generally, the second gripper could retain the trays for a different MTU to pick up and leave the device (100) without it.

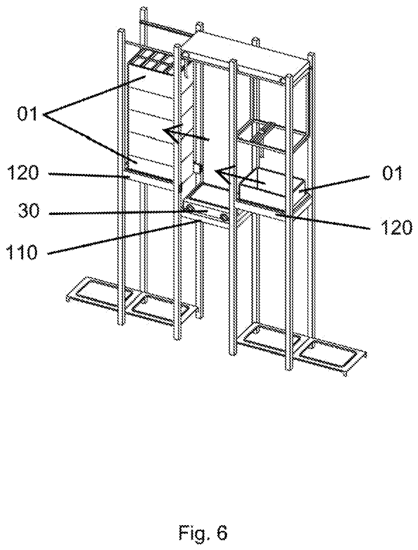

Fig. 6 shows the position of the automatic picking device directly from the brought stack of trays (100), in which, after picking the next item, the acceptor tray (01) is full and it is replaced. In this case, the second gripper (120) of the device (100) may pick up and hold the entire stack of trays (01) brought earlier by the MTU (30), while the first gripper (120) of the device (100) moves the tray-acceptor (01) to the TMU (30).

Generally, the acceptor tray can also by placed on top or bottom or anywhere in the middle of the stack trays the received object C was delivered in or in any of those positions of a further stack that arrives later on.

Figure 7 shows another aspect of the automatic item picking device (200) directly from a brought stack of trays configured to operate in a stackable tray storage system (10) preferably connected to it by transport tracks (20), in which automatic transport mobile devices (30) may be used to feed stacks of trays (01). Thus, the illustrated aspect shows the device (200) to be operated simultaneously by two MTUs (30) which may be adapted to bring stacks of trays (01) to it via the transport tracks (20). Furthermore, the combination of the mechanisms comprising the device may be different. The automatic item picking device directly from the brought stack of trays (200) may comprise at least of the following in any combination:
- a vertical movable loading beam (210) equipped with two windows through which the stacks of trays (01) on the transport tracks (20) below it can pass;
- two grippers (220), one gripper per window, designed for gripping / installing and holding any number of trays (01) from the stacks of trays (01) brought to the MTU (30);
- two groups of pallet grippers (240) attached to the bottom surface of the load traverse, one group of grippers at each window of the traverse (210). The pallet grippers (240) may be designed to pick up any number of pallets (02, 03, 04) of the pallet stacks located in the stack trays (01);
- a separately mounted lifting device (230) equipped with an object gripper (250) designed for moving objects between a tray (01), a lifted stack of TMU trays (30) and a tray-acceptor (01) or the upper tray of a stack set in place (15).

Another aspect of the automatic picking device (200), shown here, may operates with at least one of the subsequent steps in any combination
- a tray-acceptor (01) or a stack of trays with the upper tray-acceptor on it is placed in the storage area (15) next to the lift (230) equipped with an object lifter (250);
- along the transport tracks (20), two MTUs (30) with stacks of trays containing the target items arrive under the loading beam (210);
- The loading beam (210) may move vertically downwards to the grip level of the lower of the two stack trays standing on the two MTUs (30), the grip (220) may grip the required tray with the remaining stack trays standing on it, the beam may then raise higher to take the required number of pallets inside the target item tray with the pallet grips (240);
- Then the MTU (30) with the target object prepared for picking from above may move to the lift unit (250) with the object gripper (250); preferably at the same time, the load crossbeam (210) may move vertically upwards to the gripping level of the upper tray of the two stack trays, grips the required tray with the further stacked trays standing on it, then the crossbeam moves higher to take the required number of pallets inside the target object tray with the pallet grippers (240);
- further, the item gripper (250) may move the first target item from the stack of trays into the tray acceptor, the first MTU (30) may return to the load tray (210) where first the pallet gripper (240) may bring the previously removed pallets back and then the gripper (220) returns the trays of the stack to their original state;
- in particular after completing the picking of the items (250) of the second target item from the stack of trays on the second MTU (30) but not limited thereto, the second MTU (30) may return to the load tray (210) where the pallet gripper (240) of the second tray window and then the gripper (220) returns the stack of trays on the second MTU (30) to their original state.

The presented aspect of the automatic appliance for the direct picking of objects from a stack of trays (200) may differ from the first version in the lack of a lifting platform (30) and preferably in other combinations of mechanisms: in the first variant, the tray grippers (120) may be combined with the load platform (110) and/or the pallet gripper (140) may be combined with the moving platform (130) and/or the item gripper (150); In the aspect shown (200), the tray gripper (220) and/or pallet gripper (240) may be mounted on a lifting beam (210) and may move upwards/downwards preferably in co-operation with the stacks of trays (01) mounted horizontally on the conveyor belts (20) of the MTU (30), the item gripper (250) preferably being also vertically displaceable by the lifting device (230) of which it is a part.

In the presented aspect of the automatic apparatus for picking items directly from a brought stack of trays (200) there may be one load carrier (210) equipped with two grippers of a stack of trays (220) and/or two grippers (240) of pallets, and/or a device equipped with one item gripper (250) preferably placed on a lift device (250) - the quantities mentioned above are only indicative, but not limiting to the invention.

Fig. 8 shows another aspect of an automatic item picking device directly picking from a stack of trays (300) which might have been delivered before, configured to operate in a tray stacking system (10), linked to it by transport tracks (20), in which automatic transport mobile devices (30) are used to feed stacks of trays (01).

In the device shown in Fig. 8, all the mechanisms may be lined up above the transport tracks (20), along which preferably two MTUs (30) in particular from different sides (right and left) may deliver stacks of trays containing the target items to the device (300). Thus, the automatic item picking device for picking in particular directly from the brought stack of trays (300) may comprise at least one of the following in any combination:
- at least two levelers equipped with a group of tray grippers (320) each, with the grippers (320) preferably placed on each horizontal level of the tray stack, and/or by rotating or extending the pair of grippers of the appropriate level, the leveler is adapted to grip the tray of that level and all the trays above it in the stack. The log beds are positioned at the beginning and at the end of the device row (300), being the starting mechanism, when the MTU (30) approaches with the stack of trays (01);
- further, at least two lift devices (310) with pallet grippers (340) are provided, which are designed to take the required number of pallets (02, 03, 04) from the target tray of the stack, to provide access to the target item preferably from the tray below;
- in the center there may be a loading beam (330) in particular equipped with an object gripper (350) designed for moving objects from the target trays into the tray-acceptor (01) or the stack of tray-acceptors brought under it by the MTU (30) along the second row of transport tracks (20).

The operation in the presented third aspect of the apparatus (300) may proceed with at least one of the following steps in any combination
- along the second row on the transport tracks (20), a tray-acceptor (01) or a stack of it is brought to the MTU (30) and may be placed under the load beams (330) with an object gripper (350);
- preferably parallel to this, the MTU (30) in particular with stacks of trays (01) containing the target item on one of the trays (02, 03, 04) may be driven up to the left and/or right of the unit (300);
- MTU (30) with stacks of target items may drive into the leveler , there the required grips may be actuated and the trays that close access to the target items may be removed from the stacks of trays;
- thereafter, the MTU (30) with the upper target trays (01) may drive into the working areas of the lift units (310) with the tray grippers (340), which are adapted to remove the upper trays (02, 03, 04) that may obstruct access to the target items preferably in the tray below it;
- Then, the MTU (30) may drive in particular one after the other under the load tray (330) with object picker (350), which may move vertically picking up the target object from the stack and/or may transfer it to the acceptor tray (01) located in the second row;
- after picking, the MTU (30) may be moved in reverse order, in particular first to the lift units (310) with the pallet grippers (340), then to the tray grippers (320), where the initial conditions of the stacks of trays brought in by the MTU (30) may be restored.

The presented third aspect of the automatic apparatus in particular for picking items directly from a brought stack of trays (300), there may be no functionally connected devices, so that the tray gripper (320) may be separate and/or the pallet gripper (340) with the lift devices (310) may be separate, and/or the item gripper (350) with the load traverse (330) may be separate. As according to the second aspect of the device (200), in this aspect (300) there may be no vertical movement of the MTU (30) and/or its detachment from the level of the transport tracks (20). Otherwise, the methods of operation may be identical in all three aspects.

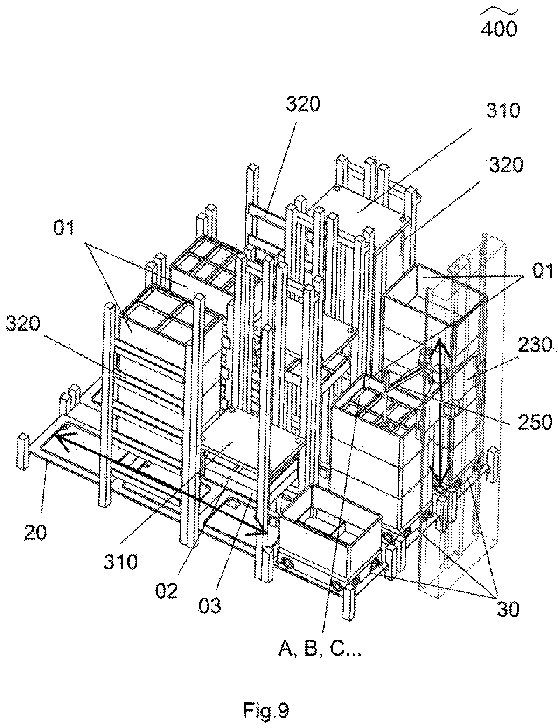

Figure 9 shows an aspect of the invention, according to which the mechanisms (a - 320 and b - 310) included according to previous aspects are duplicated three times. Thus, in this variant of the device there are three levelers with tray grippers (320), shown earlier in the third variant of the device, as well as three lifting devices (310) from the same variant, and as a component device there is one/single manipulator (250) moving vertically by means of a carriage (230), shown earlier in the second variant of the device.

The presence of three levelers with tray grippers (320) and three lifting devices (310) in three neighboring rows (of rail tracks (20)) or adjacent to each other, makes it possible to prepare/move target items (A, B, C...) on/onto target pallets (02), (03) located in target trays (01) (of stacks of trays) brought by the MTU (30), as well as target pallets for placing items in three stacks at once, and to move them between these stacks by means of the manipulator (250). Also, the items may be moved between any three stacks of trays (01) located in the working area of the manipulator (250).

Thus, in each row of rail tracks (20), the stack of trays (01) is processed as follows:
The levelers with tray grippers (320) remove the trays (01) of the stack above the target tray.

The MTU(s) (30) may move into the working area(s) of the load lifter(s) (310), which remove(s) the pallets (02), (03) above the target pallet from the target tray(01).

The MTU (30) with the exposed target pallet(s) (02) or (03) located in the target tray(s) (01) of the stack(s) of trays move(s) to the working area of the manipulator (250), where the objects (A,B,C...) are moved between the (three) and/ (similarly) prepared stacks of trays (01) / exposed target pallet(s) (02, 03).

After the object manipulation is completed, any tray stack(s) brought in may be restored to its original state, regardless of the other tray stacks involved in the picking process, by means of the reverse sequence of actions.

Also, by means of reversing the sequence of actions required to reach the target tray or the target pallet, it is possible instead of restoring the initial state of the tray stack, to prepare the next target item or pallet for picking by shuttle movement of the MTU (30) (with the tray stack) between the devices ((320)) ->(310)->(250)->(310)->((320)), until the stock of the tray stack is exhausted or filled.

Thus, the presence of three adjacent (rows of rail tracks (20))/mechanisms a and b, thus the devices (320) and (310) and one common manipulator (250) allows for the picking of items both from a single donor stack of trays into a plurality of acceptor stacks of trays until the content of the donor stack of trays is completely exhausted, and for the complete filling of a single acceptor stack of trays from a plurality of donor stacks of trays. The donor stack may be provided via one of the three or more pathways 320 → 310 →250.

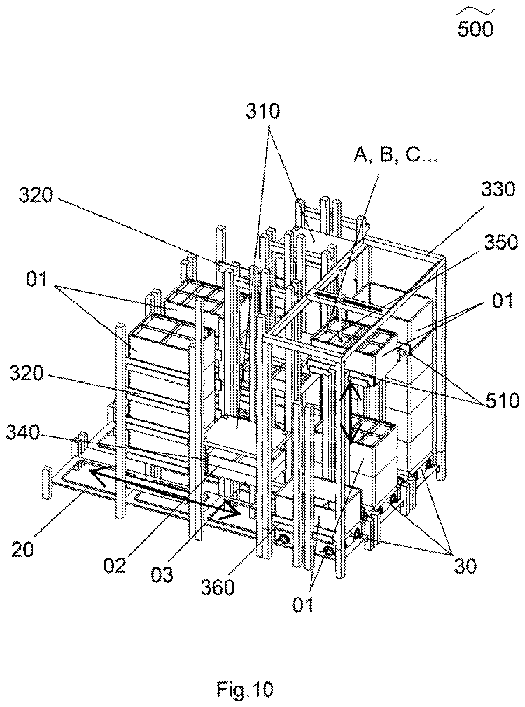

Figure 10 illustrates another aspect of the invention of a picking device (500) comprising, similar to the previous aspect, three or more adjacent rows of rail tracks (20) / adjacent mechanisms a and b equipped with three or more tray grippers (320), three or more lifting devices (310), and a common manipulator (350), located above all three or more rows of rail tracks (20), below which are located load lifters (510), one in each row, designed to lift any upper target tray of the stacks of trays to the working height of the common manipulator (350).

The function of the device proposed in Figure 10, is basically identical to the way of operation of the last aspect of the invention according to Fig. 9 only with the difference that the cargo lifters (510) provide vertical movement of objects (A,B,C...) and target pallets (02), (03) to the manipulator (350) instead of the manipulator (250) moving vertically between different heights of the tray on the MTU (01) between which the target items are shifted.

The aspect according to fig. 10 has the same advantages as the previous variant according to fig. 9 of the device proposed above, but in comparison with may have a slightly higher speed of picking items/resorting items between target pallets due to the presence of three load elevators (510).

Any feature from any aspect of the invention is hereby disclosed also in the context of any other aspect or embodiment such that all disclosed features from all disclosed aspects and embodiments are interchangeable.

## Claims

1. Storage and sorting system comprising at least
- one stack of trays (01)
o the stack of trays (01) comprises at least two trays (01) stacked on top of each other
o In each tray (01) there are at least two stacked sorting pallets (02, 03,...) for individual storage of objects (A, B, C,...).
▪ Each pallet (02, 03,...) comprises individual storage units of different size.
- a mobile transport unit (30) is provided on which the stack of trays (01) is transportable,
- a sorting apparatus (100/200/300) is provided, which allows for picking up an individual object A or B or C (...) or a group of individual objects from any of the trays (01) and any of the pallets (02, 03,...) respectively,
wherein the sorting apparatus (100/200/300) comprises two or three mechanisms:
a. A mechanism (120, 220, 320) that is adapted to lift up the tray(s) (01) from the source tray in which the object(s) (A, B, C,...) is/are located,
b. A mechanism (140, 240, 340) that is adapted to lift up any/all pallets (02, 03,...) inside the source tray, from the pallet (03,...) on which the object (A, B, C,...) is located
c. A mechanism (150, 250, 350) adapted to pick up and transfer the object (A, B, C,...) from the source pallet to a target tray (01) which is either part of the stack of trays or a separate tray
wherein in the case of two mechanisms mechanism "a." and mechanism "b." are the same mechanism and
wherein the mechanism a and b are provided as adjacent multiples n with an any natural number of greater or equal to 1 with a single or a number of adjacent mechanism(s) c that is lower than the number of mechanisms a and/or b but is at least 1.

2. Storage and sorting system according to claim 1
**characterized in that**
the mechanism (120, 220, 320) to lift up the trays comprises a lift with a gripping and/or holding element adapted to grip and/or hold and lift a tray or a sub-stack of trays from the stack of trays (01).

3. Storage and sorting system according to claim 1 or 2
**characterized in that**
the mechanism that lifts up the pallets (02, 03,...) comprises an elevator.

4. Storage and sorting system according to any of claims 1 to 3
**characterized in that**
the mechanism (150) for picking up and transferring the object (A, B, C,...), is arranged above the mechanism that lifts up the pallets (02, 03,...).

5. Storage and sorting system according to any of claims 1 to 4
**characterized in that**
at least one of mechanisms a to c is provided at least twice.

6. Use of a sorting apparatus (100/200/300) in a storage and sorting system according to claims 1 to 5, the sorting apparatus comprising
a a mechanism (120, 220, 320) that is adapted to lift up from a stack of trays the tray(s) (01) from a source tray in which object(s) (A, B, C,...) is/are located,
b. a mechanism that is adapted to lift up any/all pallets (02, 03,...) inside the source tray, from the pallet (03,...) on which the object (A, B, C,...) is located
c. a mechanism (150) adapted to pick up and transfer the object (A, B, C,...) from the source pallet to a target tray (01) which is either part of the stack of trays or a separate tray.

7. Use of a storage and sorting apparatus according to any of claim 6
wherein the mechanism (150, 250, 350) adapted to pick up and transfer objects is movable vertically to reach the object(s) (A, B, C,...) in an individual pallet and/or a lifting mechanism (110, 510) is provided which is adapted to lift the upper source tray and all remaining tray(s) below it or the MTU with the upper source tray and all remaining tray(s) below it to the mechanism (150, 250, 350) adapted to pick up and transfer objects.

8. Use of a storage and sorting apparatus according to 6 or 7, wherein a mechanism (510) is provided and adapted to vertically move a top tray of a stack of target items (A,B,C...) and/or a target pallet (02,03...) to the Mechanism (150, 250, 350) adapted to pick up and transfer objects.

9. Use of a stackable tray in a storage and sorting system according to claims 1 to 5 comprising at least one pallet (02, 03,...) arranged therein, whereby the pallet (02, 03,...) comprises individual storage units of different size.

10. A method of sorting objects (A, B, C,...) from a source pallet (02, 03, ...) on a source tray (01) within a stack of trays to a target pallet on a target tray, wherein the source tray (01) and the target tray are located in the same or different pallets and/or trays or stacks of trays and the method of storage of such objects the method comprising:
- providing a sorting system according to claim 1
- actuating the mechanism "a." (120, 220, 320) to lift up the tray(s) (01) from the source tray in which the object(s) (A, B, C,...) is/are located
- actuating the mechanism "b." (140, 240, 340) adapted lift up any/all pallets (02, 03,...) inside the source tray, from the pallet (03,...) on which the object (A, B, C,...) is located
- actuating the mechanism "c." (150, 250, 350) to pick up and transfer the object (A, B, C,...) from the source pallet (03) to the target pallet on the target tray (01).

11. The method of claimed 10, wherein the method further comprises:
- receiving the object (A, B, C,...) on the target pallet of the target tray (01) after transfer by the mechanism (150, 250, 350);
- put back any pallets on top of the target pallet of the target tray (01) stack of trays;
repositioning the target tray in a stack of trays and
storing the stack of trays in a storage facility.

12. The method of claim 10 or 11, wherein the process of lifting up trays from a target tray and lifting up pallets from the target pallet in the target tray is conducted simultaneously multiple times with multiple mechanisms "a." and "b." adjacent to each other wherein the pick-up and transfer process between these multiple target pallets is conducted with a common, preferably a single, manipulator hence a common/single mechanism "c.".

13. The method of claim 10 to 12, wherein the mechanism "c." (150, 250, 350) is movable vertically to reach the object(s) (A, B, C,...) in the individual pallets at different heights and/or a lifting mechanism (110, 510) is provided which is adapted to lift the upper source tray and all remaining tray(s) below it or the MTU with the upper source tray and all remaining tray(s) below it to the mechanism "c." (150, 250, 350) adapted to pick up and transfer objects between target trays.

14. The method of claim 10 to 13, wherein with the same mechanism (510) is used to move the top tray of a stack of target items (A,B,C...) or target pallet (02,03...) vertically via the gripper arm (150, 250, 350).

## Patentansprüche

1. Lager- und Sortiersystem, umfassend mindestens
einen Stapel von Behältern (01)
der Stapel von Behältern (01) umfasst mindestens zwei übereinander gestapelte Behälter (01)
in jedem Behälter (01) befinden sich mindestens zwei gestapelte Sortierpaletten (02, 03,...) zur individuellen Lagerung von Gegenständen (A, B, C,...)
jede Palette (02, 03,...) umfasst individuelle Lagereinheiten unterschiedlicher Größe eine mobile Transporteinheit (30) ist vorgesehen, auf der der Stapel von Behältern (01) transportierbar ist,
eine Sortiervorrichtung (100/200/300) ist vorgesehen, die es ermöglicht, einen einzelnen Gegenstand A oder B oder C (...) oder eine Gruppe von einzelnen Gegenständen aus einem beliebigen der Behälter (01) bzw. einer beliebigen der Paletten (02, 03,...) zu entnehmen,
wobei
die Sortiervorrichtung (100/200/300) zwei oder drei Mechanismen umfasst:
a. Einen Mechanismus (120, 220, 320), der dafür ausgelegt ist, den/die Behälter (01) vom Quellbehälter, in dem sich der/die Gegenstand/Gegenstände (A, B, C,...) befindet/befinden, anzuheben,
b. Einen Mechanismus (140, 240, 340), der dafür ausgelegt ist, alle/jede Palette(n) (02, 03,...) innerhalb des Quellbehälters von der Palette (03,...), auf der sich der Gegenstand (A, B, C,...) befindet, anzuheben
c. Einen Mechanismus (150, 250, 350), der dafür ausgelegt ist, den Gegenstand (A, B, C,...) von der Quellpalette aufzunehmen und in einen Zielbehälter (01) zu transferieren, der entweder Teil des Behälterstapels oder ein separater Behälter ist
wobei im Fall von zwei Mechanismen Mechanismus "a." und Mechanismus "b." der gleiche Mechanismus sind und
wobei der Mechanismus a und b als benachbarte Vielfache n mit einer beliebigen natürlichen Zahl größer oder gleich 1 mit einem einzelnen oder einer Anzahl von benachbarten Mechanismus/Mechanismen c vorgesehen sind, die niedriger ist als die Anzahl der Mechanismen a und/oder b, aber mindestens 1 beträgt.

2. Lager- und Sortiersystem nach Anspruch 1
**dadurch gekennzeichnet, dass**
der Mechanismus (120, 220, 320) zum Anheben der Behälter einen Lift mit einem Greif- und/oder Halteelement umfasst, das dafür ausgelegt ist, einen Behälter oder einen Teilstapel von Behältern aus dem Behälterstapel (01) zu greifen und/oder zu halten und anzuheben.

3. Lager- und Sortiersystem nach Anspruch 1 oder 2
**dadurch gekennzeichnet, dass**
der Mechanismus, der die Paletten (02, 03,...) anhebt, einen Aufzug umfasst.

4. Lager- und Sortiersystem nach einem der Ansprüche 1 bis 3
**dadurch gekennzeichnet, dass**
der Mechanismus (150) zum Aufnehmen und Transferieren des Gegenstands (A, B, C,...) über dem Mechanismus angeordnet ist, der die Paletten (02, 03,...) anhebt.

5. Lager- und Sortiersystem nach einem der Ansprüche 1 bis 4
**dadurch gekennzeichnet, dass**
mindestens einer der Mechanismen a bis c mindestens zweimal vorgesehen ist.

6. Verwendung einer Sortiervorrichtung (100/200/300) in einem Lager- und Sortiersystem nach den Ansprüchen 1 bis 5, wobei die Sortiervorrichtung umfasst
a einen Mechanismus (120, 220, 320), der dafür ausgelegt ist, den/die Behälter (01) vom Quellbehälter, in dem sich der/die Gegenstand/Gegenstände (A, B, C,...) befindet/befinden, aus einem Stapel von Behältern anzuheben,
b. einen Mechanismus, der dafür ausgelegt ist, alle/jede Palette(n) (02, 03,...) innerhalb des Quellbehälters von der Palette (03,...), auf der sich der Gegenstand (A, B, C,...) befindet, anzuheben
c. einen Mechanismus (150), der dafür ausgelegt ist, den Gegenstand (A, B, C,...) von der Quellpalette aufzunehmen und in einen Zielbehälter (01) zu transferieren, der entweder Teil des Behälterstapels oder ein separater Behälter ist.

7. Verwendung einer Lager- und Sortiervorrichtung nach Anspruch 6
wobei der Mechanismus (150, 250, 350), der dafür ausgelegt ist, Gegenstände aufzunehmen und zu transferieren, vertikal beweglich ist, um den/die Gegenstand/Gegenstände (A, B, C,...) in einer einzelnen Palette zu erreichen und/oder ein Hebemechanismus (110, 510) vorgesehen ist, der dafür ausgelegt ist, den oberen Quellbehälter und alle darunter verbleibenden Behälter oder die MTU mit dem oberen Quellbehälter und allen darunter verbleibenden Behältern zu dem Mechanismus (150, 250, 350) anzuheben, der dafür ausgelegt ist, Gegenstände aufzunehmen und zu transferieren.

8. Verwendung einer Lager- und Sortiervorrichtung nach Anspruch 6 oder 7, wobei ein Mechanismus (510) vorgesehen und dafür ausgelegt ist, einen oberen Behälter eines Stapels von Zielgegenständen (A,B,C...) und/oder eine Zielpalette (02,03...) vertikal zu dem Mechanismus (150, 250, 350) zu bewegen, der dafür ausgelegt ist, Gegenstände aufzunehmen und zu transferieren.

9. Verwendung eines stapelbaren Behälters in einem Lager- und Sortiersystem nach den Ansprüchen 1 bis 5, umfassend mindestens eine darin angeordnete Palette (02, 03,...), wobei die Palette (02, 03,...) individuelle Lagereinheiten unterschiedlicher Größe umfasst.

10. Verfahren zum Sortieren von Gegenständen (A, B, C,...) von einer Quellpalette (02, 03, ...) auf einem Quellbehälter (01) innerhalb eines Stapels von Behältern zu einer Zielpalette auf einem Zielbehälter, wobei sich der Quellbehälter (01) und der Zielbehälter in der gleichen oder in verschiedenen Paletten und/oder Behältern oder Stapeln von Behältern befinden, und Verfahren zur Lagerung solcher Gegenstände, wobei das Verfahren umfasst:
- Bereitstellen eines Sortiersystems nach Anspruch 1
- Betätigen des Mechanismus "a." (120, 220, 320), um den/die Behälter (01) vom Quellbehälter anzuheben, in dem sich der/die Gegenstand/Gegenstände (A, B, C,...) befindet/befinden
- Betätigen des Mechanismus "b." (140, 240, 340), der dafür ausgelegt ist, alle/jede Palette(n) (02, 03,...) innerhalb des Quellbehälters von der Palette (03,...) anzuheben, auf der sich der Gegenstand (A, B, C,...) befindet
- Betätigen des Mechanismus "c." (150, 250, 350), um den Gegenstand (A, B, C,...) von der Quellpalette (03) aufzunehmen und zur Zielpalette auf dem Zielbehälter (01) zu transferieren.

11. Verfahren nach Anspruch 10, wobei das Verfahren ferner umfasst:
- Empfangen des Gegenstands (A, B, C,...) auf der Zielpalette des Zielbehälters (01) nach dem Transfer durch den Mechanismus (150, 250, 350);
- Zurücklegen aller Paletten auf die Zielpalette des Zielbehälters (01) Stapel von Behältern;
Neupositionieren des Zielbehälters in einem Stapel von Behältern und
Lagern des Stapels von Behältern in einer Lagereinrichtung.

12. Verfahren nach Anspruch 10 oder 11, wobei der Prozess des Anhebens von Behältern von einem Zielbehälter und des Anhebens von Paletten von der Zielpalette im Zielbehälter gleichzeitig mehrfach mit mehreren benachbarten Mechanismen "a." und "b." durchgeführt wird, wobei der Aufnahme- und Transferprozess zwischen diesen mehreren Zielpaletten mit einem gemeinsamen, vorzugsweise einem einzigen, Manipulator, also einem gemeinsamen/einzigen Mechanismus "c.", durchgeführt wird.

13. Verfahren nach Anspruch 10 bis 12, wobei der Mechanismus "c." (150, 250, 350) vertikal beweglich ist, um den/die Gegenstand/Gegenstände (A, B, C,...) in den einzelnen Paletten in verschiedenen Höhen zu erreichen und/oder ein Hebemechanismus (110, 510) vorgesehen ist, der dafür ausgelegt ist, den oberen Quellbehälter und alle darunter verbleibenden Behälter oder die MTU mit dem oberen Quellbehälter und allen darunter verbleibenden Behältern zu dem Mechanismus "c." (150, 250, 350) anzuheben, der dafür ausgelegt ist, Gegenstände zwischen Zielbehältern aufzunehmen und zu transferieren.

14. Verfahren nach Anspruch 10 bis 13, wobei mit demselben Mechanismus (510) der obere Behälter eines Stapels von Zielgegenständen (A,B,C...) oder die Zielpalette (02,03...) vertikal über den Greiferarm (150, 250, 350) bewegt wird.

## Revendications

1. Système de stockage et de tri comprenant au moins
une pile de plateaux (01)
+ la pile de plateaux (01) comprend au moins deux plateaux (01) empilés les uns sur les autres
+ Dans chaque plateau (01) il y a au moins deux palettes de tri empilées (02, 03,...) pour le stockage individuel d'objets (A, B, C,...).
- Chaque palette (02, 03,...) comprend des unités de stockage individuelles de tailles différentes.
une unité de transport mobile (30) est fournie sur laquelle la pile de plateaux (01) est transportable,
un appareil de tri (100/200/300) est fourni, qui permet de prélever un objet individuel A ou B ou C (...) ou un groupe d'objets individuels de n'importe lequel des plateaux (01) et de n'importe laquelle des palettes (02, 03,...) respectivement,
où
l'appareil de tri (100/200/300) comprend deux ou trois mécanismes :
a. Un mécanisme (120, 220, 320) qui est adapté pour soulever le(s) plateau(x) (01) du plateau source dans lequel le(s) objet(s) (A, B, C,...) est/sont situé(s),
b. Un mécanisme (140, 240, 340) qui est adapté pour soulever n'importe quelle/toutes les palettes (02, 03,...) à l'intérieur du plateau source, de la palette (03,...) sur laquelle l'objet (A, B, C,...) est situé
c. Un mécanisme (150, 250, 350) adapté pour prélever et transférer l'objet (A, B, C,...) de la palette source vers un plateau cible (01) qui fait soit partie de la pile de plateaux soit est un plateau séparé
où dans le cas de deux mécanismes, le mécanisme "a." et le mécanisme "b." sont le même mécanisme et
où les mécanismes a et b sont fournis comme multiples adjacents n avec n étant un nombre naturel supérieur ou égal à 1 avec un seul ou un nombre de mécanisme(s) c adjacent(s) qui est inférieur au nombre de mécanismes a et/ou b mais est au moins 1.

2. Système de stockage et de tri selon la revendication 1
**caractérisé en ce que**
le mécanisme (120, 220, 320) pour soulever les plateaux comprend un élévateur avec un élément de préhension et/ou de maintien adapté pour saisir et/ou maintenir et soulever un plateau ou une sous-pile de plateaux de la pile de plateaux (01).

3. Système de stockage et de tri selon la revendication 1 ou 2
**caractérisé en ce que**
le mécanisme qui soulève les palettes (02, 03,...) comprend un élévateur.

4. Système de stockage et de tri selon l'une quelconque des revendications 1 à 3
**caractérisé en ce que**
le mécanisme (150) pour prélever et transférer l'objet (A, B, C,...), est disposé au-dessus du mécanisme qui soulève les palettes (02, 03,...).

5. Système de stockage et de tri selon l'une quelconque des revendications 1 à 4
**caractérisé en ce que**
au moins l'un des mécanismes a à c est fourni au moins deux fois.

6. Utilisation d'un appareil de tri (100/200/300) dans un système de stockage et de tri selon les revendications 1 à 5, l'appareil de tri comprenant
a un mécanisme (120, 220, 320) qui est adapté pour soulever d'une pile de plateaux le(s) plateau(x) (01) d'un plateau source dans lequel le(s) objet(s) (A, B, C,...) est/sont situé(s),
b. un mécanisme qui est adapté pour soulever n'importe quelle/toutes les palettes (02, 03,...) à l'intérieur du plateau source, de la palette (03,...) sur laquelle l'objet (A, B, C,...) est situé
c. un mécanisme (150) adapté pour prélever et transférer l'objet (A, B, C,...) de la palette source vers un plateau cible (01) qui fait soit partie de la pile de plateaux soit est un plateau séparé.

7. Utilisation d'un appareil de stockage et de tri selon la revendication 6
où le mécanisme (150, 250, 350) adapté pour prélever et transférer les objets est mobile verticalement pour atteindre le(s) objet(s) (A, B, C,...) dans une palette individuelle et/ou un mécanisme de levage (110, 510) est fourni qui est adapté pour soulever le plateau source supérieur et tous les plateaux restants en dessous ou l'unité de transport mobile avec le plateau source supérieur et tous les plateaux restants en dessous jusqu'au mécanisme (150, 250, 350) adapté pour prélever et transférer les objets.

8. Utilisation d'un appareil de stockage et de tri selon 6 ou 7, dans laquelle un mécanisme (510) est fourni et adapté pour déplacer verticalement un plateau supérieur d'une pile d'objets cibles (A,B,C...) et/ou une palette cible (02,03...) vers le mécanisme (150, 250, 350) adapté pour prélever et transférer les objets.

9. Utilisation d'un plateau empilable dans un système de stockage et de tri selon les revendications 1 à 5 comprenant au moins une palette (02, 03,...) disposée à l'intérieur, où la palette (02, 03,...) comprend des unités de stockage individuelles de tailles différentes.

10. Procédé de tri d'objets (A, B, C,...) d'une palette source (02, 03, ...) sur un plateau source (01) dans une pile de plateaux vers une palette cible sur un plateau cible, où le plateau source (01) et le plateau cible sont situés dans les mêmes ou différentes palettes et/ou plateaux ou piles de plateaux et le procédé de stockage de tels objets, le procédé comprenant :
- la fourniture d'un système de tri selon la revendication 1
- l'actionnement du mécanisme "a." (120, 220, 320) pour soulever le(s) plateau(x) (01) du plateau source dans lequel le(s) objet(s) (A, B, C,...) est/sont situé(s)
- l'actionnement du mécanisme "b." (140, 240, 340) adapté pour soulever n'importe quelle/toutes les palettes (02, 03,...) à l'intérieur du plateau source, de la palette (03,...) sur laquelle l'objet (A, B, C,...) est situé
- l'actionnement du mécanisme "c." (150, 250, 350) pour prélever et transférer l'objet (A, B, C,...) de la palette source (03) vers la palette cible sur le plateau cible (01).

11. Procédé selon la revendication 10, dans lequel le procédé comprend en outre :
- la réception de l'objet (A, B, C,...) sur la palette cible du plateau cible (01) après le transfert par le mécanisme (150, 250, 350) ;
- la remise en place de toutes les palettes sur le dessus de la palette cible du plateau cible (01) pile de plateaux ;
le repositionnement du plateau cible dans une pile de plateaux et
le stockage de la pile de plateaux dans une installation de stockage.

12. Procédé selon la revendication 10 ou 11, dans lequel le processus de soulèvement des plateaux d'un plateau cible et de soulèvement des palettes de la palette cible dans le plateau cible est effectué simultanément plusieurs fois avec plusieurs mécanismes "a." et "b." adjacents les uns aux autres, où le processus de prélèvement et de transfert entre ces multiples palettes cibles est effectué avec un manipulateur commun, de préférence unique, donc un mécanisme "c." commun/unique.

13. Procédé selon les revendications 10 à 12, dans lequel le mécanisme "c." (150, 250, 350) est mobile verticalement pour atteindre le(s) objet(s) (A, B, C,...) dans les palettes individuelles à différentes hauteurs et/ou un mécanisme de levage (110, 510) est fourni qui est adapté pour soulever le plateau source supérieur et tous les plateaux restants en dessous ou l'unité de transport mobile avec le plateau source supérieur et tous les plateaux restants en dessous jusqu'au mécanisme "c." (150, 250, 350) adapté pour prélever et transférer les objets entre les plateaux cibles.

14. Procédé selon les revendications 10 à 13, dans lequel le même mécanisme (510) est utilisé pour déplacer verticalement le plateau supérieur d'une pile d'objets cibles (A,B,C...) ou la palette cible (02,03...) via le bras de préhension (150, 250, 350).
